# EUROPÄISCHE PATENTSCHRIFT

(11) **EP 3 152 753 B1**
(45) Veröffentlichungstag und Bekanntmachung des Hinweises auf die Patenterteilung: **13.03.2019**
(21) Anmeldenummer: 15729096.6
(22) Anmeldetag: 29.05.2015
(51) Int. Cl.: G10L 15/22, G10L 15/32

(54) **ASSISTENZSYSTEM, DAS MITTELS SPRACHEINGABEN STEUERBAR IST, MIT EINER FUNKTIONSEINRICHTUNG UND MEHREREN SPRACHERKENNUNGSMODULEN**
ASSISTANCE SYSTEM THAT CAN BE CONTROLLED BY MEANS OF VOICE INPUTS, HAVING A FUNCTIONAL DEVICE AND A PLURALITY OF VOICE RECOGNITION MODULES
SYSTÈME D'ASSISTANCE POUVANT ÊTRE COMMANDÉ AU MOYEN D'ENTRÉES VOCALES ET COMPRENANT UN MOYEN FONCTIONNEL ET PLUSIEURS MODULES DE RECONNAISSANCE DE LA PAROLE

(30) Priorität: 05.06.2014 DE 102014210716
(43) Veröffentlichungstag der Anmeldung: 12.04.2017
(73) Patentinhaber: Continental Automotive GmbH, 30165 Hannover (DE)
(72) Erfinder: RÜHL, Hans-Wilhelm, 35606 Solms (DE); WALTHER, Jens, 35112 Fronhausen (DE)
(86) Internationale Anmeldenummer: PCT/EP2015/062032
(87) Internationale Veröffentlichungsnummer: WO 2015/185464

(56) Entgegenhaltungen:
- WO-A1-02/50817
- US-A1- 2004 204 942
- US-A1- 2009 326 945
- US-A1- 2013 132 089

## Beschreibung

Die Erfindung liegt auf dem Gebiet der Automatisierung, der Elektrotechnik und der Datenverarbeitung und ist mit besonderem Nutzen bei der Bedienung von Geräten einsetzbar, die an Bord von Fahrzeugen oder anderen Transportmitteln verwendet werden und die sprachgesteuert eingesetzt werden können, um die Aufmerksamkeit und Bedienkapazität von Nutzern, die mit anderen wichtigen Aufgaben, wie z. B. dem Führen eines Fahrzeugs, beschäftigt sind, nur minimal zu beanspruchen. Beispielsweise werden solche Assistenzsysteme zur Bedienung von Aggregaten in Kraftfahrzeugen, beispielsweise von Navigationssystemen und Multimediageräten, eingesetzt.

Sprachgesteuert kann beispielsweise der Fahrer eines Fahrzeugs seinem Navigationsgerät eine Anweisung geben und diese mit einer Adressangabe verbinden. Ähnliche Anweisungen sind in Verbindung mit einem Telefon möglich, so dass ein Adressat oder eine Zieltelefonnummer genannt werden und dem Telefon mitgeteilt werden kann, was mit dieser Nummer geschehen soll, ob sie beispielsweise angerufen werden soll oder ob ein neuer Telefonbucheintrag unter der angegebenen Nummer erstellt werden soll.

Entsprechende Spracherkennungsverfahren sind inzwischen so weit entwickelt, dass das Erkennen von Anweisungen und Adressen relativ zuverlässig möglich ist. Ein derartiges Gerät stößt jedoch an Grenzen, sobald die Ausspracheregeln für Anweisungen und Datenbankinhalte, beispielsweise Straßennamen, nicht mehr klar sind. Solche Situationen können leicht dann auftreten, wenn sich ein Fahrer mit seinem Fahrzeug ins Ausland bewegt, wo eine Sprache gesprochen wird, die er nicht oder nur schlecht beherrscht.

Oft ist es möglich, zumindest bei einem Navigationssystem, die Straßennamen in einem Land in der Landessprache zu hinterlegen. Zudem ist oft auch eine Übersetzung in eine viel gesprochene weitere Sprache vorhanden. Jedoch ist es kaum sicherzustellen, dass für alle in Frage kommenden Muttersprachen der Nutzer in den möglichen Zielländern, in denen diese sich bewegen können, die jeweiligen heimischen Straßennamen gemäß der Aussprache in der Muttersprache oder Heimatsprache des Nutzers in einer Datenbank abgespeichert sind.

Es kann dann über Ausspracheähnlichkeiten von verschiedenen Sprachen versucht werden, eine Spracheingabe dennoch einer Adressangabe in der nicht beherrschten Sprache des Ziellandes zuzuordnen; jedoch wird hierfür ein nicht unbedeutender Rechenaufwand und damit eine Rechenkapazität verwendet, die in den üblicherweise an Bord von Kraftfahrzeugen eingesetzten Embedded-Systemen nicht zur Verfügung steht.

Lösungsversuche, um dieser Probleme Herr zu werden, sind teilweise bereits bekannt geworden. So ist in der europäischen Patentanmeldung 1975923 A1 beschrieben, dass für bestimmte Elemente einer gesprochenen Eingabe eine sogenannte Verwechslungs- oder Ähnlichkeitsmatrix erstellt wird, die die Verwechslungswahrscheinlichkeiten eines Wortes mit bestimmten anderen Wörtern einer anderen Sprache darstellt. Aufgrund dieser Verwechslungsmatrix kann mittels einer Zuordnungsmetrik letztendlich versucht werden, bestimmten Elementen eines gesprochenen Befehls eine mit erhöhter Wahrscheinlichkeit richtige Bedeutung zuzuordnen. Dabei scheinen jedoch sämtliche Elemente einer gesprochenen Botschaft ähnlich behandelt zu werden, und es scheinen auch für die Bedeutungszuweisung jedes der Elemente Hypothesen für verschiedene Sprachen zugelassen zu werden. Damit wird die Bedeutungszuweisung, insbesondere bei zusammengesetzten Befehlen, sehr aufwendig und komplex.

Aus der US-Patentanmeldung 2002/0091518 A1 ist eine Spracherkennungseinrichtung bekannt, in der zwei Spracherkennungsmodule nach Unterscheidung bestimmter Kommunikationssituationen selektiv eingesetzt werden. Die Regeln, nach denen die Spracherkennung in den einzelnen Modulen erfolgt, scheinen gleich zu sein.

Aus der US 2013/132089 A1 ist ein Spracherkennungssytem mit zwei Spracherkennungsmodulen, nämlich einem lokal und einem entfernt angeordneten Spracherkennungsmodul, bekannt, wobei die beiden Spracherkennungsmodule nach unterschiedlichen Regeln arbeiten.

Vor dem Hintergrund des Standes der Technik liegt der vorliegenden Erfindung die Aufgabe zugrunde, ein Assistenzsystem mit einer Spracherkennungseinrichtung zu schaffen, die unter Einsatz möglichst geringer Ressourcen sprachübergreifend und mit möglichst hoher Genauigkeit die Erkennung von Spracheingaben ermöglicht.

Die Erfindung wird mit den Merkmalen der Erfindung gemäß Patentanspruch 1 gelöst. Die Unteransprüche geben vorteilhafte Ausgestaltungen der Erfindung an.

Dementsprechend bezieht sich die Erfindung auf ein Assistenzsystem, das wenigstens teilweise mittels Spracheingaben steuerbar ist, mit einer Funktionseinrichtung und einer Spracherkennungseinrichtung, wobei die Spracherkennungseinrichtung wenigstens ein erstes Spracherkennungsmodul aufweist, das einer Spracheingabe gemäß einem ersten System von Regeln eine Bedeutung zuordnet, sowie ein zweites Spracherkennungsmodul, das Spracheingaben gemäß einem zweiten System von Regeln eine Bedeutung zuordnet, wobei jeweils aufgrund der Ergebnisse eines der beiden Spracherkennungsmodule ermittelt wird, welche Sprachabschnitte einer Spracheingabe das erste Spracherkennungsmodul und welche Sprachabschnitte das zweite Spracherkennungsmodul verarbeitet.

Das erfindungsgemäße Assistenzsystem weist als Funktionseinrichtung ein Navigationssystem für ein Kraftfahrzeug auf. Es werden in der Spracherkennungseinrichtung zwei Spracherkennungsmodule eingesetzt, die Spracheingaben nach verschiedenen Systemen von Regeln interpretieren. Hierdurch wird es möglich, die beiden Spracherkennungsmodule in verschiedenen Sprachen oder nach verschiedenen Ausspracheregeln Spracheingaben bearbeiten zu lassen. Dies wird möglich, da in modernen Embedded-Systemen gerade ausreichende Rechnerkapazität zur Verfügung steht, um mehrere Spracherkennungsmodule gleichzeitig oder überlappend zu betreiben oder intermittierend zwischen ihnen umzuschalten. Dadurch ist es möglich, eine Spracheingabe in mehrere Sprachabschnitte zu unterteilen, die nach unterschiedlichen Regelsystemen durch die unterschiedlichen Spracherkennungsmodule bearbeitet werden können. Eine Einteilung der Spracheingabe in Sprachabschnitte kann beispielsweise nach dem Kriterium erfolgen, dass ein erster Teil in einer von einem Spracherkennungsmodul beherrschten Nutzersprache eingegeben und dann auch erkannt wird, während ein zweiter Sprachabschnitt in einer anderen Sprache oder nach Ausspracheregeln einer anderen Sprache eingegeben wird. Dies ist besonders dann vorteilhaft, wenn ein Teil der Spracheingabe sich auf Angaben bezieht, die in einer Adressdatenbank aufgefunden werden sollen, wie beispielsweise bei geografischen Adressen in einem Navigationssystem oder Telefonnummern in einer Mobilfunkeinrichtung.

Die Erfindung kann dabei vorteilhaft dadurch ausgestaltet werden, dass die Spracherkennungsmodule zum Zuordnen von Bedeutung zu den Sprachabschnitten Regeln verwenden, die unterschiedlichen Sprachen entstammen.

Eine vorteilhafte Ausgestaltung der Erfindung sieht vor, dass das Spracherkennungsmodul, aufgrund dessen Ergebnissen die Sprachabschnitte bestimmt werden, die Sprachabschnitte derart ermittelt, insbesondere die Spracheingabe derart in Sprachabschnitte einteilt, dass wenigstens ein erster der Sprachabschnitte im Wesentlichen als Arbeitsanweisung erkannt wird, und dass für wenigstens einen zweiten der Sprachabschnitte ein Eintrag in einer Adressdatenbank vermutet wird, der insbesondere einen Ortsnamen und einen Straßennamen oder einen Ortsnamen und den Namen einer besonderen Örtlichkeit (POI oder Point of Interest) aufweist.

Das Spracherkennungsmodul, das die Sprachabschnitte festlegt, z. B. die Spracheingabe in geeignete Teile gemäß der zeitlichen Länge einteilt, kann hierzu zunächst Teile der Spracheingabe in einer eingestellten Nutzersprache mit möglichen Arbeitsanweisungen vergleichen und, sobald eine ausreichende Ähnlichkeit mit einer Arbeitsanweisung erzielt wird, den entsprechenden Sprachabschnitt mit der Arbeitsanweisung von dem Rest der Spracheingabe isolieren. Der Rest der Spracheingabe, also beispielsweise ein zweiter Sprachabschnitt, kann dann an ein anderes Spracherkennungsmodul zur weiteren Bearbeitung abgegeben werden.

Die Bearbeitung in den mehreren Spracherkennungsmodulen kann dabei seriell, also nacheinander, erfolgen, jedoch auch überlappend oder gleichzeitig. Bei einer gleichzeitigen Bearbeitung können beide Spracherkennungsmodule in der Spracheingabe nach den von ihnen bevorzugt zu bearbeitenden Sprachabschnitten suchen und entsprechend eine Einteilung in Sprachabschnitte vorschlagen. Stimmt die Einteilung der vorgeschlagenen Sprachabschnitte überein, so kann die Spracheingabe entsprechend dem übereinstimmenden Vorschlag aufgeteilt werden. Stimmt die Einteilung in Sprachabschnitte, die von den Spracherkennungsmodulen vorgeschlagen wird, nicht überein, so kann festgelegt werden, dass eines der Spracherkennungsmodule bei der Entscheidung über die Einteilung Vorrang hat.

Üblicherweise kann ein Spracherkennungsmodul, das auf die Erkennung von Arbeitsanweisungen spezialisiert ist, in einer relativ großen Anzahl von Nutzersprachen ohne größeren Aufwand betrieben werden. Dagegen liegen Spracherkennungsdaten, die zur Erkennung einer gesprochenen Adresse aus einer Adressdatenbank dienen sollen, üblicherweise nur in einer sehr begrenzten Anzahl von Sprachen vor, da die Beschreibung der Aussprache der in der Datenbank hinterlegten Adressen üblicherweise nur in den Landessprachen zur Verfügung gestellt wird.

Es kann aber beispielsweise vorgegeben werden, dass die Adresse oder ein Name in der Originalsprache oder in einer verbreiteten Sprache, beispielsweise Englisch, Deutsch oder Französisch, auszusprechen ist, wobei zumindest in den hauptsächlich als Hilfssprachen in Frage kommenden Sprachen die entsprechende Aussprachebeschreibung für die Datenbank hinterlegt sein kann. Es ergibt sich dann als Vorteil, dass die entsprechenden Datenbanken nicht in jede in Frage kommende Nutzersprache übersetzt werden müssen. Dies ist beispielsweise in Ländern von Vorteil, die im Vergleich zu Ländern wie z. B. Großbritannien relativ wenig verbreitete Sprachen nutzen, wie beispielsweise Schweden oder Norwegen.

Eine vorteilhafte Ausgestaltung der Erfindung sieht zudem vor, dass das Spracherkennungsmodul, aufgrund dessen Ergebnissen die Sprachabschnitte ermittelt werden, durch die vom Benutzer gewählte Sprache festgelegt ist.

Es kann außerdem vorteilhaft vorgesehen sein, dass das Spracherkennungsmodul, aufgrund dessen Ergebnissen die Sprachabschnitte ermittelt werden, ein Modul ist, das zur Erkennung von Arbeitsanweisungen eingerichtet ist.

Oft hat das Spracherkennungsmodul, das in der Nutzersprache arbeitet, eine bessere Erkennungsrate als das Spracherkennungsmodul, das für die Erkennung von Datenbankeinträgen in Hilfssprachen eingerichtet ist.

Es kann jedoch auch vorgesehen sein, dass das Spracherkennungsmodul, aufgrund dessen Ergebnissen die Sprachabschnitte ermittelt werden, zur Erkennung von Einträgen in einer Adressdatenbank eingerichtet ist.

Eine vorteilhafte Ausgestaltung der Erfindung sieht zudem vor, dass das erste Spracherkennungsmodul Sprachabschnitten nach Regeln und Ausspracheregeln einer ersten Nutzersprache des Assistenzsystems eine Bedeutung, insbesondere eine Arbeitsanweisung, zuordnet.

Es kann außerdem vorteilhaft vorgesehen sein, dass das zweite Spracherkennungsmodul Sprachabschnitten nach Regeln, insbesondere Ausspracheregeln, einer von der ersten Nutzersprache verschiedenen ersten Hilfssprache eine Bedeutung zuordnet.

Dabei kann insbesondere vorgesehen sein, dass das zweite Spracherkennungsmodul Sprachabschnitten nach Regeln, insbesondere Ausspracheregeln, einer von der ersten Nutzersprache verschiedenen zweiten Hilfssprache eine Bedeutung zuordnet.

Für eine möglichst gute Erkennung von Bedeutungsinhalten kann vorgesehen sein, dass den zu erkennenden Sprachabschnitten verschiedene Bedeutungsinhalte, auch gemäß verschiedenen Systemen von Regeln, zugeordnet werden und darauf gemäß einer definierten Metrik der wahrscheinlichste Bedeutungsinhalt ausgewählt wird.

Dabei kann auch vorgesehen sein, dass dem/den zu erkennenden Sprachabschnitt(en) jeweils gemäß den Ausspracheregeln von wenigstens zwei verschiedenen Hilfssprachen je eine Bedeutung zugeordnet wird und dass gemäß einer definierten Metrik die wahrscheinlichste Bedeutung ausgewählt wird.

Die Erfindung kann vorteilhaft auch dadurch ausgestaltet werden, dass die erste Hilfssprache und insbesondere auch die zweite Hilfssprache vom Assistenzsystem unter Berücksichtigung der aktuell genutzten Nutzersprache ausgewählt wird. Dabei wird davon ausgegangen, dass der Nutzer des Assistenzsystems als Nutzersprache eine Sprache wählt, die er relativ gut beherrscht. Damit können Rückschlüsse auf andere Sprachen gezogen werden, die von der Nutzersprache verschieden sind, deren Aussprache aber beispielsweise der Aussprache der Nutzersprache relativ ähnlich ist und die für den Betrieb des zweiten Spracherkennungsmoduls zur Verfügung stehen. Beispielsweise kann, wenn der Nutzer Italienisch als Nutzsprache auswählt, Italienisch jedoch für das zweite Spracherkennungsmodul nicht zur Verfügung steht, für dieses als Hilfssprache Spanisch ausgewählt werden, da die spanische Aussprache eines Nutzers, der Italienisch beherrscht, möglicherweise besser ist als seine Aussprache der englischen Sprache.

Steht beispielsweise für die Erkennung von Adressen in der Adressdatenbank Schwedisch und Dänisch zur Verfügung und hat der Nutzer als Nutzsprache Deutsch ausgewählt, so kann beispielsweise als Hilfssprache der schwedischen Sprache der Vorzug gegeben werden, da die Ausspracheregeln der schwedischen Sprache möglicherweise denen der deutschen Sprache ähnlicher sind als die der dänischen Sprache.

Es kann jedoch auch vorgesehen sein, dass die erste Hilfssprache und insbesondere auch die zweite Hilfssprache vom Nutzer auswählbar ist. Somit kann den Vorlieben oder möglicherweise besonderen Fähigkeiten des Nutzers, der vielleicht eine der Hilfssprachen ansatzweise beherrscht, Rechnung getragen werden.

Die Erfindung bezieht sich außer auf ein Assistenzsystem auch auf ein Verfahren zum Betrieb eines Assistenzsystems der oben beschriebenen Art.

Im Folgenden wird die Erfindung anhand von Ausführungsbeispielen in Figuren einer Zeichnung gezeigt und nachfolgend erläutert. Dabei zeigt:
- Fig. 1: schematisch ein Kraftfahrzeug mit einem Nutzer und einem Assistenzsystem,
- Fig. 2: eine Spracherkennungseinrichtung in schematischer Form,
- Fig. 3: eine in mehrere Sprachabschnitte eingeteilte Spracheingabe,
- Fig. 4: ein erstes Ablaufschema eines Spracherkennungsverfahrens sowie
- Fig. 5: ein zweites Ablaufschema eines Spracherkennungsverfahrens.

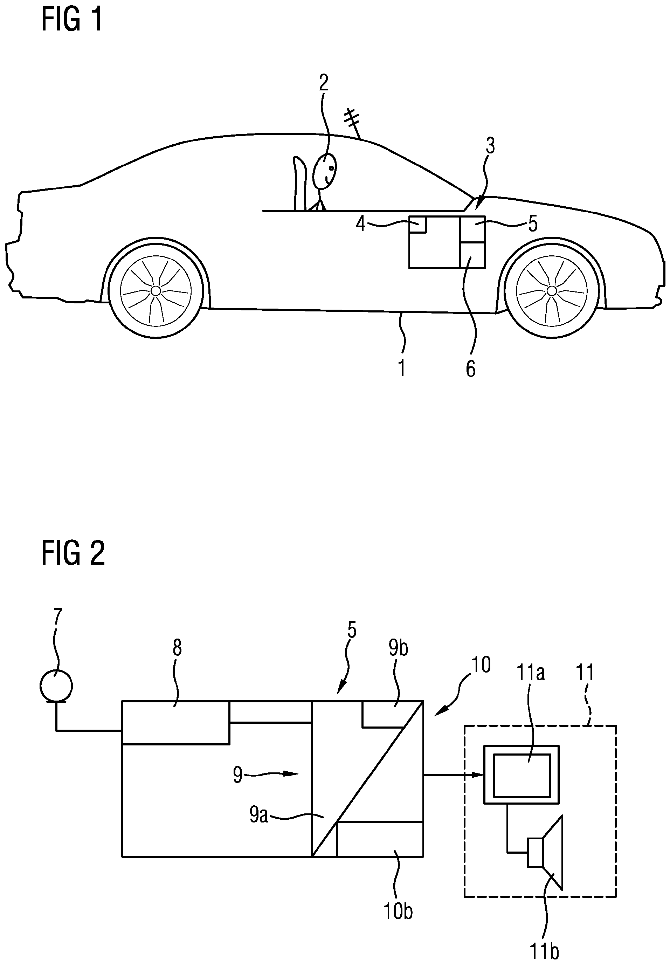

Figur 1 zeigt schematisch ein Kraftfahrzeug 1 mit einem darin sitzenden Nutzer 2 sowie einem Assistenzsystem 3, das nur schematisch angedeutet ist und ein Fahrzeugnavigationssystem umfasst. Das Assistenzsystem 3 weist eine Spracheingabeeinrichtung 4, eine Spracherkennungseinrichtung 5 sowie eine Funktionseinrichtung 6 für die eigentliche Navigation auf. Mit der Funktionseinrichtung verbunden oder von dieser umfasst ist dann beispielsweise ein GPS-Modul, das den momentanen Aufenthaltsort des Fahrzeugs ermittelt, zu dem Zielort in Beziehung setzt und hieraus Routen bzw. Navigationsanweisungen an den Fahrer ermittelt und ausgibt.

In Figur 2 ist schematisch die Spracherkennungseinrichtung 5 detaillierter dargestellt. Die Spracherkennungseinrichtung 5 ist mit einem Mikrofon 7 verbunden, von dem aus Signale, die von akustischen Signalen durch das Mikrofon in analoge elektrische Signale umgewandelt worden sind, in einen Analog/Digital-Wandler 8 geleitet werden. Vom Analog/Digital-Wandler gelangen die Signale zu den Spracherkennungsmodulen 9, 10, die symbolisch durch Dreiecke dargestellt sind. Die beiden dargestellten Spracherkennungsmodule 9, 10 bilden jeweils Teile der Spracherkennungseinrichtung 5.

Das erste Spracherkennungsmodul 9 weist einen Eingangsteil 9a sowie eine Speichereinrichtung 9b auf. Der Eingangsteil 9a zerlegt die Signale gemäß einem Algorithmus in Vektoren, so dass diese erkennbar sind und mit in der Speichereinrichtung 9b gespeicherten Referenzvektoren verglichen werden können. Der zur Zerlegung in Vektoren benutzte Algorithmus kann beispielsweise eine Fourier-Transformation umfassen, so dass die Elemente der Vektoren Amplituden bestimmter Frequenzanteile bedeuten oder umfassen, oder der Algorithmus kann auch eine Polynomzerlegung umfassen, so dass einzelne Komponenten der Vektoren Polynomanteile bedeuten, oder eine Kombination von beiden Methoden oder auch eine andere aus dem Stand der Technik bekannte Methode zur Projektion von akustischen Daten auf Phoneme. Nach der Charakterisierung der Sprachdaten können diese mit den in der Speichereinrichtung 9b enthaltenen Sprachdaten verglichen werden, und es kann den Sprachdaten eine Kombination aus Phonemen zugeordnet werden, die die größte Ähnlichkeit nach einer vorgegebenen Metrik mit einer Referenzgröße aufweisen.

Dabei sind in der Speichereinrichtung 9b beispielsweise auch Navigationsbefehle enthalten, wie beispielsweise "Ich möchte nach ..." oder "Bitte nach ... fahren" oder "Navigation nach ..." usw.

Das erste Spracherkennungsmodul 9 kann somit feststellen, ob es Teile der Spracheingabe als Navigationsbefehle wiedererkennt. Die Wahrscheinlichkeit dafür, dass dies gelingt, ist relativ hoch, da für diesen Teil der Navigation üblicherweise viele Nutzersprachen zur Verfügung stehen, so dass der Nutzer wahrscheinlich in seiner Muttersprache sprechen kann und damit die Wahrscheinlichkeit einer korrekten Aussprache und Erkennung der Spracheingabe hoch ist.

Wird ein Navigationsbefehl erkannt, verbleibt üblicherweise der Teil der Spracheingabe, der einer Adresse entspricht und der nicht immer durch das erste Spracherkennungsmodul 9 erkannt werden kann. Das erste Spracherkennungsmodul 9 kann diesen Sprachabschnitt von dem Sprachabschnitt trennen, den es erkannt hat, und zur weiteren Analyse an das zweite Spracherkennungsmodul 10 weitergeben. Es können jedoch auch beide Spracherkennungsmodule, das erste Spracherkennungsmodul 9 und das zweite Spracherkennungsmodul 10, gleichzeitig auf die Spracheingabe, d. h. auf die durch den A/D-Wandler ausgegebenen Signale, zugreifen, so dass jedes der Sprachmodule erkennen kann, welchen Teil der Spracheingabe es erfolgreich analysieren kann.

Das zweite Spracherkennungsmodul 10 kann gemäß der Erfindung mit anderen Lautumschriftdaten als das erste Spracherkennungsmodul arbeiten, was bedeutet, dass beim Vergleich der Signale mit Eintragungen in einer Adressdatenbank 10b eine Aussprache in einer anderen Sprache als der Nutzersprache, nämlich beispielsweise einer ersten Hilfssprache, möglich wird. Die Sprachsignale werden somit mit den Eintragungen der Datenbank 9b gemäß einer Lautumschrift in einer Hilfssprache verglichen, die nicht die Nutzersprache ist. Dies kann beispielsweise die Originalsprache eines Adressdatenverzeichnisses sein, d. h., bei einem schwedischen Adressverzeichnis (das also schwedische Straßennamen enthält) kann dies die schwedische Sprache sein. Es kann jedoch auch die Aussprache schwedischer Straßennamen nach englischen Ausspracheregeln zugrunde gelegt werden, oder die Aussprache gemäß einer anderen Hilfssprache, die zur Verfügung steht.

Üblicherweise muss dabei davon ausgegangen werden, dass die Aussprache durch den Nutzer von der idealen Aussprache in der ersten oder zweiten Hilfssprache weiter abweicht, als dies bei dem Teil der Spracheingabe geschieht, der in der Nutzersprache erfolgt und durch das erste Spracherkennungsmodul 9 bearbeitet wird. Im Ausgleich dafür sind jedoch bei Adresseneingaben nicht so vielfältige Änderungen durch Flexion oder andere Abwandlung zu erwarten wie bei der relativ freien Eingabe eines Navigationsbefehls.

Auch bei der Analyseaufgabe des zweiten Spracherkennungsmoduls 10 werden die Sprachsignale mit verschiedenen in der Datenbank 10b vorhandenen Lautumschriften verglichen, und es wird die Eintragung zugeordnet, die dem Sprachsignal des ausgewählten Sprachabschnitts am ähnlichsten ist. Dabei können auch Lautumschriften in verschiedenen Hilfssprachen, in dem oben angegebenen Beispiel Englisch und Schwedisch, gleichzeitig in Betracht gezogen und bezüglich der Ähnlichkeit mit der Spracheingabe miteinander verglichen werden, um die beste Entsprechung zu finden. Nach der Bearbeitung der Sprachabschnitte der Spracheingabe durch die beiden Spracherkennungsmodule 9, 10 werden die Bedeutungsinhalte, die jeweils durch die Spracherkennungsmodule zugeordnet sind, zusammengesetzt und können an eine Ausgabeeinrichtung 11 ausgegeben werden, die eine optische Anzeige 11a, beispielsweise in Form eines Bildschirms, und eine akustische Ausgabeeinheit, beispielsweise in Form eines Lautsprechers 11b, enthalten kann. Die erkannten Sprachabschnitte können dann so, wie sie erkannt worden sind, nochmals ausgegeben werden, um eine Bestätigung durch den Nutzer abzufordern. Nach einer Bestätigung werden die erkannten Bedeutungsinhalte an die eigentliche Funktionseinrichtung weitergegeben, die die geografische Lage der Adresse in der Navigationsdatenbank feststellt und zu dem augenblicklichen Aufenthaltsort in Beziehung setzt.

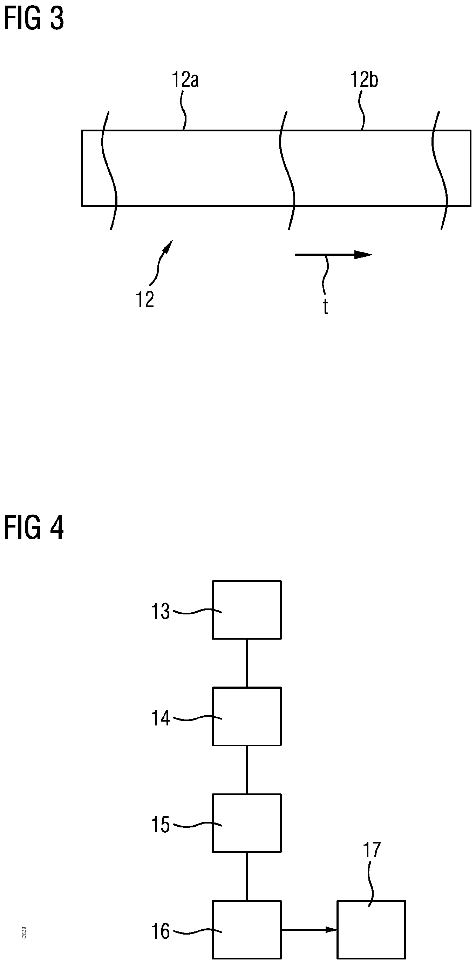

Figur 3 zeigt schematisch eine Spracheingabe 12, die ein über die Zeit (dargestellt durch den Zeitpfeil t) veränderliches akustisches bzw. elektrisches Signal enthält und die in verschiedene Sprachabschnitte 12a, 12b einteilbar ist. Es können auch mehr als zwei, beispielsweise drei oder vier, Sprachabschnitte in einer Spracheingabe vorhanden sein.

Figur 4 zeigt schematisch einen Verfahrensablauf, bei dem in einem ersten Schritt 13 innerhalb eines erfindungsgemäßen Assistenzsystems eine Spracheingabe von einem Nutzer gesprochen, von einem Mikrofon aufgenommen und in elektrische Signale bzw. einen elektrischen Signalverlauf umgewandelt wird. In einem zweiten Verfahrensschritt 14 wird das eingegebene Sprachsignal von einem ersten Spracherkennungsmodul 9 in der Nutzersprache analysiert, es wird dem Sprachabschnitt, dem das erste Spracherkennungsmodul Bedeutung zuordnen kann, ein Bedeutungsinhalt zugeordnet, und das übrige oder die übrigen Sprachabschnitte werden an das zweite Spracherkennungsmodul weitergegeben, oder, wenn das Sprachsignal als Ganzes von beiden Spracherkennungsmodulen 9, 10 gleichzeitig bearbeitet wird, wird zu diesem Zeitpunkt von dem ersten Spracherkennungsmodul an das zweite Spracherkennungsmodul eine Information abgegeben, welchem Sprachabschnitt sich das zweite Spracherkennungsmodul bei der Bearbeitung zuwenden soll.

In einem dritten Schritt 15, der gleichzeitig mit dem zweiten Schritt 14 oder nach dem zweiten Schritt 14 erfolgen kann, wird durch das zweite Spracherkennungsmodul 10 der Sprachabschnitt des Sprachsignals analysiert, der durch das erste Spracherkennungsmodul 9 nicht bearbeitet wurde. Diesem wird ebenfalls eine Bedeutung zugeordnet, und die zugeordneten Bedeutungsinhalte des ersten und zweiten Spracherkennungsmoduls 9, 10 werden zu einer Gesamtinterpretation in einem vierten Schritt 16 zusammengefügt und in einem fünften Schritt 17 ausgegeben.

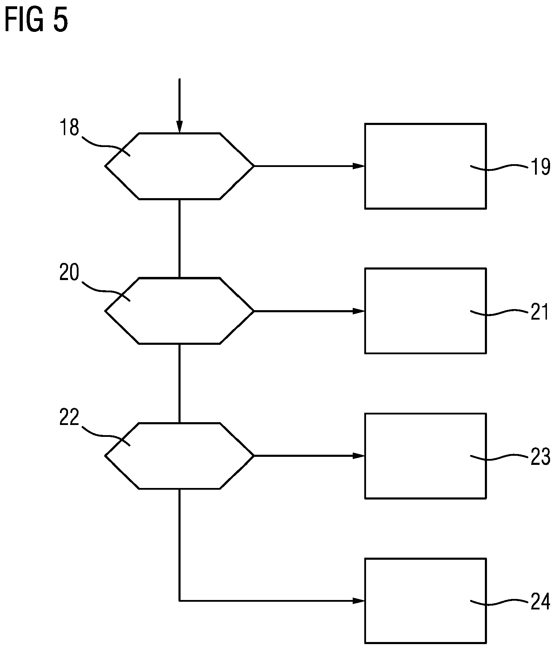

Figur 5 stellt detailliert den Vorgang dar, in dem die Spracherkennungseinrichtung an eine Datenbank mit Adresseinträgen angepasst wird. Dies ist beispielsweise dann der Fall, wenn der Fahrer dem Navigationsgerät mitteilt, dass das nächste Ziel in einem anderen Land liegt.

Zunächst wird als Eingangssignal die Information eingegeben, dass eine neue Adressdatenbank verwendet wird oder ein neuer, bisher unbenutzter Teil der bereits eingesetzten Adressdatenbank benutzt wird. In einem ersten Schritt 18 wird ermittelt, ob die neue Datenbank in der benutzten Nutzersprache des Assistenzsystems verwendet werden kann. Ist dies der Fall, so wird zu einer Verfahrensgestaltung 19 übergegangen, in der der gesamte Inhalt der Spracheingabe, also auch alle verschiedenen Sprachabschnitte, in der Nutzersprache analysiert werden.

Wird in der neuen Datenbank die Nutzersprache nicht unterstützt, so wird zu dem Schritt 20 gesprungen, in dem ermittelt wird, ob die neue Datenbank die Erkennung von Adressdaten in mehreren Sprachen unterstützt. Ist das nicht Fall, so wird zu dem zweiten Verfahrensablauf 21 geschritten, in dem danach das zweite Spracherkennungsmodul in der einzigen zur Verfügung stehenden Sprache zur Erkennung von Adressdaten betrieben wird, während das erste Spracherkennungsmodul weiterhin in der Nutzersprache des Assistenzsystems arbeitet. Beide Sprachabschnitte des eingegebenen Sprachsignals werden dann in verschiedenen Sprachen bearbeitet.

Werden mehrere verschiedene Sprachen durch die neue Datenbank unterstützt, d. h., liegen Lautumschriften für die Adressen in verschiedenen Sprachen vor, so wird zu dem dritten Verfahrensschritt 22 gesprungen, in dem ermittelt wird, ob der momentane Nutzer von den durch die neue Datenbank unterstützten Sprachen eine bevorzugt. Ist dies der Fall, so wird diese Sprache für die Bearbeitung durch das zweite Spracherkennungsmodul 10 im Rahmen eines dritten Verfahrensablaufs 23 festgelegt. In der Folge wird das Sprachsignal bezüglich des ersten, einen Navigationsbefehl enthaltenden Sprachabschnitts durch das erste Spracherkennungsmodul in der Nutzersprache analysiert, während der zweite Sprachabschnitt, der Adressdaten enthält, in der vom Nutzer präferierten Sprache durch das zweite Spracherkennungsmodul bearbeitet wird.

Gibt der Nutzer keine von ihm präferierte Sprache ein und liegt keine präferierte Sprache im System vor, so wird von dem dritten Verfahrensschritt 23 zum vierten Verfahrensablauf 24 gesprungen, in dem eine vorgegebene Hilfssprache, die von der neuen Datenbank unterstützt wird, für die Analysetätigkeit des zweiten Spracherkennungsmoduls eingesetzt wird, während das erste Spracherkennungsmodul Sprachabschnitte in der Nutzersprache analysiert.

Grundsätzlich erlaubt das erfindungsgemäße System somit dem Nutzer, einerseits Navigationsbefehle und Adresseingaben in der Nutzersprache zu machen und, wenn die Benutzung der Nutzersprache für die Adresseingabe nicht möglich ist, für die Adresse andere Sprachen (Hilfssprachen) zu benutzen. Die Erkennung der Adresse in einer Hilfssprache kann durch ein zweites Spracherkennungsmodul vorgenommen werden, während die Erkennung eines Arbeitsbefehls in einem ersten Spracherkennungsmodul in der Nutzersprache vorgenommen wird. Durch die Durchführung eines zweiten Erkennungsdurchgangs nach der Durchführung des ersten Erkennungsdurchgangs erhöht sich die Auslastung des Datenverarbeitungssystems nicht.

Es können jedoch auch beide Spracherkennungsmodule parallel arbeiten. In diesem Fall wird eine erhöhte Systemauslastung in Kauf genommen. Allerdings muss das zweite Spracherkennungsmodul den Sprachabschnitt, den es in der Hilfssprache erkennt, von dem Sprachabschnitt trennen, der in der Nutzersprache bearbeitet werden soll und den das zweite Spracherkennungsmodul nicht erkennt.

In einer Variante, in der die Bearbeitung der verschiedenen Sprachabschnitte sequenziell erfolgt, kann zunächst durch das erste, in der Nutzersprache arbeitende Spracherkennungsmodul die Erkennung und Einteilung des Sprachsignals in einen ersten und einen zweiten Sprachabschnitt geleistet werden, wobei der erste Sprachabschnitt in der Nutzersprache und der zweite Sprachabschnitt in einer Hilfssprache zu bearbeiten/erkennen ist. Ungenauigkeiten bei der Einteilung der beiden Sprachabschnitte können eine potenzielle Fehlerrate erhöhen, da gegebenenfalls in einem folgenden Bearbeitungsschritt, wenn das zweite Spracherkennungsmodul nach den Regeln einer Hilfssprache eine Erkennung durchführt, ein Teil des Sprachsignals gegebenenfalls als unerkennbar zu verwerfen ist. Wird zunächst durch das erste Spracherkennungsmodul der Arbeitsbefehl, der in dem Sprachsignal den Adressteil im zweiten Sprachabschnitt umgibt oder diesem vorangeht, erkannt und der Wortlaut mit an das zweite Spracherkennungsmodul übergeben, so ist die Modellierung des Übergangs zwischen dem ersten Sprachabschnitt und dem zweiten Sprachabschnitt und die Erkennung des zweiten Sprachabschnitts durch das zweite Spracherkennungsmodul vereinfacht. Dazu kann der bereits durch das erste Spracherkennungsmodul erkannte Teil des Sprachsignals in eine für das zweite Spracherkennungsmodul erkennbare Form, also beispielsweise eine Lautumschrift der Hilfssprache, übertragen werden, so dass das zweite Spracherkennungsmodul auch den Teil des Sprachsignals erkennt, den es nicht analysieren muss. Hierdurch wird innerhalb des zweiten Spracherkennungsmoduls die Modellierung des gesamten Sprachsignals ermöglicht, wodurch die Erkennungssicherheit des Adressteils im zweiten Sprachabschnitt erhöht wird. Die zusätzliche Modellierung des ersten Sprachabschnitts für das zweite Spracherkennungsmodul erhöht den zeitlichen Bearbeitungsaufwand nur unwesentlich, weil der Inhalt des ersten Sprachabschnitts bereits bekannt ist.

## Patentansprüche

1. Assistenzsystem (3), das wenigstens teilweise mittels Spracheingaben (12) steuerbar ist, mit einer Funktionseinrichtung (6) und einer Spracherkennungseinrichtung (5), wobei die Spracherkennungseinrichtung wenigstens ein erstes Spracherkennungsmodul (9) aufweist, das Spracheingaben (12) gemäß einem ersten System von Regeln verarbeitet, sowie ein zweites Spracherkennungsmodul (10), das Spracheingaben (12) gemäß einem zweiten System von Regeln verarbeitet, wobei jeweils aufgrund der Ergebnisse eines der beiden Spracherkennungsmodule (9, 10) ermittelt wird, welche Sprachabschnitte (12a, 12b) das erste Spracherkennungsmodul (9) und welche Sprachabschnitte das zweite Spracherkennungsmodul (10) verarbeitet, **dadurch gekennzeichnet, dass**
- die Spracherkennungsmodule (9, 10) zum Zuordnen eines Navigationsbefehls und einer Adresse zu den Sprachabschnitten Regeln verwenden, die unterschiedlichen Sprachen entstammen,
- das Assistenzsystem (3) mit der Spracherkennungseinrichtung (5) Bestandteil eines Kraftfahrzeigs (1) ist,
- das Assistenzsystem (3) ein Fahrzeugnavigationssystem umfasst,
- die Spracherkennungseinrichtung (5) zur Befehls- und Adresseingabe für das Fahrzeugnavigationssystem und zur Verarbeitung der Befehlseingabe und der Adresseingabe in dem ersten bzw. zweiten Spracherkennungsmodul (9,10) in Abhängigkeit von einer ausgewählten Adressdatenbank ausgelegt ist.

2. Assistenzsystem nach Anspruch 1, **dadurch gekennzeichnet, dass** das Spracherkennungsmodul (9, 10), aufgrund dessen Ergebnissen die Sprachabschnitte(12a, 12b) bestimmt werden, die Sprachabschnitte derart ermittelt, dass wenigstens ein erster (12a) der Sprachabschnitte im Wesentlichen als Navigationsbefehl erkannt wird und dass wenigstens ein zweiter (12b) der Sprachabschnitte einem Eintrag in einer Adressdatenbank entspricht.

3. Assistenzsystem nach Anspruch 1 oder 2, **dadurch gekennzeichnet, dass** das Spracherkennungsmodul (9, 10), aufgrund dessen Ergebnissen die Sprachabschnitte (12a, 12b) ermittelt werden, festgelegt ist.

4. Assistenzsystem nach Anspruch 3, **dadurch gekennzeichnet, dass** das Spracherkennungsmodul (9, 10), aufgrund dessen Ergebnissen (12a, 12b) die Sprachabschnitte ermittelt werden, ein Modul ist, das zur Erkennung von Navigationsbefehlen eingerichtet ist.

5. Assistenzsystem nach Anspruch 3, **dadurch gekennzeichnet, dass** das Spracherkennungsmodul (9, 10), aufgrund dessen Ergebnissen die Sprachabschnitte (12a, 12b) ermittelt werden, zur Erkennung von Einträgen in einer Adressdatenbank eingerichtet ist.

6. Assistenzsystem nach Anspruch 1 oder einem der folgenden, **dadurch gekennzeichnet, dass** das erste Spracherkennungsmodul (9) Sprachabschnitten (12a, 12b) nach Regeln und Ausspracheregeln einer ersten Nutzersprache des Assistenzsystems einen Navigationsbefehl, zuordnet.

7. Assistenzsystem nach Anspruch 1 oder einem der folgenden, **dadurch gekennzeichnet, dass** das zweite Spracherkennungsmodul (10) Sprachabschnitten (12a, 12b) nach Regeln, insbesondere Ausspracheregeln, einer von der ersten Nutzersprache verschiedenen ersten Hilfssprache eine Bedeutung zuordnet.

8. Assistenzsystem nach Anspruch 7, **dadurch gekennzeichnet, dass** das zweite Spracherkennungsmodul (10) Sprachabschnitten (12a, 12b) nach Regeln, insbesondere Ausspracheregeln, einer von der ersten Nutzersprache verschiedenen zweiten Hilfssprache eine Adresse zuordnet.

9. Assistenzsystem nach Anspruch 7 oder einem der folgenden, **dadurch gekennzeichnet, dass** die erste Hilfssprache und insbesondere auch die zweite Hilfssprache vom Assistenzsystem unter Berücksichtigung der aktuell genutzten Nutzersprache ausgewählt wird.

10. Assistenzsystem nach Anspruch 7 oder einem der folgenden, **dadurch gekennzeichnet, dass** die erste Hilfssprache und insbesondere auch die zweite Hilfssprache vom Nutzer auswählbar ist.

11. Verfahren zum Betrieb eines für die Verwendung in einem Kraftfahrzeug (1) ausgelegtes und ein Navigationssystem umfassten Assistenzsystems (3), das wenigstens teilweise mittels Spracheingaben (12) steuerbar ist, mit einer Funktionseinrichtung (6) und einer Spracherkennungseinrichtung (5), wobei die Spracherkennungseinrichtung wenigstens ein erstes Spracherkennungsmodul (9) aufweist, das Spracheingaben (12) gemäß einem ersten System von Regeln verarbeitet, sowie ein zweites Spracherkennungsmodul (10), das Spracheingaben (12) gemäß einem zweiten System von Regeln verarbeitet, wobei jeweils aufgrund der Ergebnisse eines der beiden Spracherkennungsmodule (9, 10) ermittelt wird, welche Sprachabschnitte (12a, 12b) das erste Spracherkennungsmodul (9) und welche Sprachabschnitte das zweite Spracherkennungsmodul (10) verarbeitet, die Spracherkennungsmodule (9,10) zum Zuordnen eines Navigationsbefehls und einer Adresse zu den Sprachabschnitten Regeln verwenden, die unterschiedlichen Sprachen entstammen, und über die Spracherkennungseinrichtung (5) eine Befehls- und eine Adresseingabe für das Navigationssystem erfolgt und die Befehlseingabe und die Adresseingabe von dem ersten bzw. zweiten Spracherkennungsmodul (9,10)in Abhängigkeit von einer zuvor ausgewählte Adressdatenbank verarbeitet werden.

## Claims

1. Assistance system (3) which can be controlled at least partially by means of voice inputs (12), having a functional device (6) and a voice recognition device (5), wherein the voice recognition device has at least one first voice recognition module (9) which processes voice inputs (12) according to a first system of rules, and a second voice recognition module (10) which processes voice inputs (12) according to a second system of rules, wherein the results of one of the two voice recognition modules (9, 10) are respectively used as the basis for identifying which voice sections (12a, 12b) are processed by the first voice recognition module (9) and which voice sections are processed by the second voice recognition module (10), **characterized in that**
- for the assignment of a navigation command and an address to the voice sections the voice recognition modules (9, 10) use rules which originate from different languages,
- the assistance system (3) with the voice recognition device (5) is a component of a motor vehicle (1),
- the assistance system (3) comprises a vehicle navigation system, and
- the voice recognition device (5) is designed for the inputting of commands and addresses for the vehicle navigation system and for the processing of the command input and address input in the first and/or second voice recognition module (9, 10) as a function of a selected address database.

2. Assistance system according to Claim 1, **characterized in that** the voice recognition module (9, 10) on the basis of whose results the voice sections (12a, 12b) are determined identifies the voice sections in such a way that at least one first voice section (12a) of the voice sections is recognized essentially as a navigation command, and **in that** at least one second voice section (12b) of the voice sections corresponds to an entry in an address database.

3. Assistance system according to Claim 1 or 2, **characterized in that** the voice recognition module (9, 10) on the basis of whose results the voice sections (12a, 12b) are identified is specified.

4. Assistance system according to Claim 3, **characterized in that** the voice recognition module (9, 10) on the basis of whose results (12a, 12b) the voice sections are identified is a module which is configured to recognize navigation commands.

5. Assistance system according to Claim 3, **characterized in that** the voice recognition module (9, 10) on the basis of whose results the voice sections (12a, 12b) are identified is configured to recognize entries in an address database.

6. Assistance system according to Claim 1 or one of the following claims, **characterized in that** the first voice recognition module (9) assigns a navigation command to voice sections (12a, 12b) according to rules and pronunciation rules of a first user language of the assistance system.

7. Assistance system according to Claim 1 or one of the following claims, **characterized in that** the second voice recognition module (10) assigns a meaning to voice sections (12a, 12b) according to rules, in particular pronunciation rules, of a first auxiliary language which is different from the first user language.

8. Assistance system according to Claim 7, **characterized in that** the second voice recognition module (10) assigns an address to voice sections (12a, 12b) according to rules, in particular pronunciation rules, of a second auxiliary language which is different from the first user language.

9. Assistance system according to Claim 7 or one of the following claims, **characterized in that** the first auxiliary language and, in particular, also the second auxiliary language is selected by the assistance system taking into account the currently used user language.

10. Assistance system according to Claim 7 or one of the following claims, **characterized in that** the first auxiliary language and, in particular, also the second auxiliary language can be selected by the user.

11. Method for operating an assistance system (3) which is designed for use in a motor vehicle (1) and comprises a navigation system and which can be controlled at least partially by means of voice inputs (12), having a functional device (6) and a voice recognition device (5), wherein the voice recognition device has at least one first voice recognition module (9) which processes voice inputs (12) according to a first system of rules, and a second voice recognition module (10) which processes voice inputs (12) according to a second system of rules, wherein the results of one of the two voice recognition modules (9, 10) are respectively used as the basis for identifying which voice sections (12a, 12b) are processed by the first voice recognition module (9) and which voice sections are processed by the second voice recognition module (10), for the assignment of a navigation command and an address to the voice sections the voice recognition modules (9, 10) use rules which originate from different languages, and a command input and an address input for the navigation system are made by means of the voice recognition device (5), and the command input and the address input are processed by the first and/or second voice recognition module (9, 10) as a function of a previously selected address database.

## Revendications

1. Système d'assistance (3) qui peut être commandé au moins partiellement au moyen d'entrées vocales (12), comprenant un dispositif fonctionnel (6) et un dispositif de reconnaissance vocale (5), le dispositif de reconnaissance vocale comportant au moins un premier module de reconnaissance vocale (9) traitant des entrées vocales (12) conformément à un premier système de règles, ainsi qu'un second module de reconnaissance vocale (10) traitant des entrées vocales (12) conformément à un second système de règles, dans lequel, sur la base des résultats de l'un des deux modules de reconnaissance vocale (9, 10), on détermine quelles sont les parties vocales (12a, 12b) qui sont traitées par le premier module de reconnaissance vocale (9) et quelles sont les parties vocales qui sont traitées par le second module de reconnaissance vocale (10),
**caractérisé en ce que**
- les modules de reconnaissance vocale (9, 10) utilisent des règles provenant de différentes langues pour associer une instruction de navigation et une adresse aux parties vocales,
- le système d'assistance (3), avec le dispositif de reconnaissance vocale (5), fait partie d'une plaque d'immatriculation de véhicule automobile (1),
- le système d'assistance (3) comprend un système de navigation pour véhicule,
- le dispositif de reconnaissance vocale (5) est conçu pour l'entrée d'instructions et d'adresses destinées au système de navigation pour véhicule et pour traiter l'entrée d'instructions et l'entrée d'adresses dans les premier et second modules de reconnaissance vocale (9, 10) en fonction d'une base de données d'adresses sélectionnée.

2. Système d'assistance selon la revendication 1, **caractérisé en ce que** le module de reconnaissance vocale (9, 10) dont les résultats permettent de déterminer les parties vocales (12a, 12b), détermine les parties vocales de telle manière qu'au moins une première (12a) des parties vocales soit sensiblement reconnue comme étant une instruction de navigation et à ce qu'au moins une seconde (12b) desdites parties corresponde à une entrée d'une base de données d'adresses.

3. Système d'assistance selon la revendication 1 ou 2, **caractérisé en ce que** le module de reconnaissance vocale (9, 10) dont les résultats permettent de déterminer les parties vocales (12a, 12b) est déterminé.

4. Système d'assistance selon la revendication 3, **caractérisé en ce que** le module de reconnaissance vocale (9, 10) dont les résultats (12a, 12b) permettent de déterminer les parties vocales, est un module qui est conçu pour reconnaître des instructions de navigation.

5. Système d'assistance selon la revendication 3, **caractérisé en ce que** le module de reconnaissance vocale (9, 10) dont les résultats permettent de déterminer les parties vocales (12a, 12b), est conçu pour reconnaître des entrées d'une base de données d'adresses.

6. Système d'assistance selon la revendication 1 ou l'un des éléments suivants,
**caractérisé en ce que** le premier module de reconnaissance vocale (9) associe une instruction de navigation à des parties vocales (12a, 12b) conformément à des règles et à des règles de prononciation d'une première langue d'utilisateur du système d'assistance.

7. Système d'assistance selon la revendication 1 ou l'un des éléments suivants,
**caractérisé en ce que** le second module de reconnaissance vocale (10) associe une signification à des parties vocales (12a, 12b) conformément à des règles, notamment à des règles de prononciation, d'une première langue auxiliaire qui est différente de la première langue d'utilisateur.

8. Système d'assistance selon la réclamation 7,
**caractérisé en ce que** le second module de reconnaissance vocale (10) associe une adresse à des parties vocales (12a, 12b) conformément à des règles, notamment à des règles de prononciation, d'une seconde langue auxiliaire différente de la première langue d'utilisateur.

9. Système d'assistance selon la revendication 7 ou l'un des éléments suivants,
**caractérisé en ce que** la première langue auxiliaire, ainsi qu'en particulier la deuxième langue auxiliaire, sont sélectionnées par le système d'assistance en tenant compte de la langue d'utilisateur actuellement utilisée.

10. Système d'assistance selon la revendication 7 ou l'un des éléments suivants,
**caractérisé en ce que** la première langue auxiliaire, ainsi qu'en particulier la deuxième langue auxiliaire, peuvent être sélectionnées par l'utilisateur.

11. Procédé pour faire fonctionner un système d'assistance (3) conçu pour être utilisé dans un véhicule automobile (1) et faisant partie d'un système de navigation, qui peut être commandé au moins partiellement au moyen d'entrées vocales (12), comportant un dispositif fonctionnel (6) et un dispositif de reconnaissance vocale (5), le dispositif de reconnaissance vocale comportant au moins un premier module de reconnaissance vocale (9) traitant des entrées vocales (12) conformément à un premier système de règles, ainsi qu'un second module de reconnaissance vocale (10) traitant des entrées vocales (12) conformément à un second système de règles, dans lequel, sur la base des résultats de l'un des deux modules de reconnaissance vocale (9, 10), on détermine quelles sont les parties vocales (12a, 12b) qui sont traitées par le premier module de reconnaissance vocale (9) et quelles sont les parties vocales qui sont traitées par le second module de reconnaissance vocale (10), et les modules de reconnaissance vocale (9, 10) utilisent des règles provenant de différentes langues pour associer une instruction de navigation et une adresse aux parties vocales, et une saisie d'instructions et d'adresses destinées au système de navigation est effectuée par l'intermédiaire du dispositif de reconnaissance vocale (5) et l'entrée d'instructions et l'entrée d'adresses sont traitées par le premier ou le second module de reconnaissance vocale (9, 10), en fonction d'une base de données d'adresses préalablement sélectionnée.
